(19) Europäisches Patentamt
European Patent Office
Office européen des brevets

(11) **EP 4 372 634 A1**

(12) **EUROPEAN PATENT APPLICATION**

(43) Date of publication:
**22.05.2024   Bulletin 2024/21**

(51) International Patent Classification (IPC):
**G06Q 10/04** (2023.01)        **G06Q 10/06** (2023.01)
**G06Q 10/0637** (2023.01)

(21) Application number: **23205541.8**

(22) Date of filing: **24.10.2023**

(52) Cooperative Patent Classification (CPC):
**G06Q 10/04; G06Q 10/06; G06Q 10/0637;**
G06F 30/20; G06Q 50/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.11.2022   US 202263384022 P
15.03.2023   US 202318184292**

(71) Applicant: **Honeywell International Inc.
Charlotte, NC 28202 (US)**

(72) Inventor: **LU, Joseph Z.
Charlotte, 28202 (US)**

(74) Representative: **Haseltine Lake Kempner LLP
Cheapside House
138 Cheapside
London EC2V 6BJ (GB)**

(54) **APPARATUSES, COMPUTER-IMPLEMENTED METHODS, AND COMPUTER PROGRAM PRODUCTS FOR IMPROVED BLENDING ELEMENT MODELING**

(57)     Embodiments of the present disclosure provide for improved modeling of blending elements. Such embodiments utilize particular dynamic element model(s) that accurately generate value(s) for predicted blending element(s) that function in accordance with any of a myriad of properties. Such dynamic element model(s) accurately account for changes in the blending element(s) over time as caused by any of a myriad of factors, including flow rate(s), tank volume(s), and/or heel volume(s). Some example embodiments generate at least one predicted blending element associated with a tank utilizing a pool tank dynamic element model, a non-buffer dynamic element model, or a heel volume dynamic element model, and output the at least one predicted blending element.

FIG. 1

**Description**

CROSS REFERENCE TO RELATED APPLICATIONS

This application claims the benefit of U.S. Provisional Patent App. No. 63/384,022, filed November 16, 2022, the contents of which are incorporated by reference herein in their entireties.

TECHNOLOGICAL FIELD

Embodiments of the present disclosure generally relate to modeling blending elements representing one or more properties of blended component(s), and specifically to modeling of dynamic and/or otherwise future value(s) for one or more properties of a resultant product based on the properties of the one or more input product(s).

BACKGROUND

In various contexts, systems attempt to predict, calculate, or otherwise determine future characteristics of a product blended in a particular tank. Often, functions may attempt to use volume-based determinations of inputs to predict future characteristics of a product resulting from blending of the inputs.

Applicant has discovered problems with current implementations of modeling characteristics of a product blended from one or more input(s). Through applied effort, ingenuity, and innovation, Applicant has solved many of these identified problems by developing embodied in the present disclosure, which are described in detail below.

BRIEF SUMMARY

In general, embodiments of the present disclosure are provided for modeling one or more predicted blending element(s). Other implementations for modeling one or more predicted blending element(s) will be, or will become, apparent to one with skill in the art upon examination of the following figures and detailed description. It is intended that all such additional implementations be included within this description be within the scope of the disclosure, and be protected by the following claims.

In accordance with a first aspect of the disclosure, a computer-implemented method for modeling of predicted blending element(s) is provided. The method is executable via any of the computing device(s) embodied in hardware, software, firmware, and/or a combination thereof, for example as described herein. In one example embodiment, the computer-implemented method includes generating at least one predicted blending element associated with a tank utilizing a pool tank dynamic element model, a non-buffer dynamic element model, or a heel volume dynamic element model. The example computer-implemented method further includes outputting the at least one predicted blending element.

Additionally or alternatively, in some embodiments of the example computer-implemented method, the at least one predicted blending element is applied to a plant-wide optimization process that generates an optimized product distribution associated with a target time interval.

Additionally or alternatively, in some embodiments of the example computer-implemented method, outputting the at least one predicted blending element includes automatically causing operation of at least one physical component of a processing plant based at least in part on the at least one predicted blending element.

Additionally or alternatively, in some embodiments of the example computer-implemented method, outputting the at least one predicted blending element includes automatically generating, via a system, a user interface including the at least one predicted blending element, where the system is configured to enable control of at least one physical component of a processing plant based on the at least one predicted blending element.

Additionally or alternatively, in some embodiments of the example computer-implemented method, the at least one predicted blending element is generated utilizing the pool tank dynamic element model, wherein the pool tank dynamic element model is based at least in part on at least one flow rate associated with the tank.

Additionally or alternatively, in some embodiments of the example computer-implemented method, the at least one predicted blending element is generated utilizing the pool tank dynamic element model, where the pool tank dynamic element model is one of a linear blending pool tank dynamic element model, an index blending pool tank dynamic element model, a corrective bonuses blending pool tank dynamic element model, or a non-linear blending pool tank dynamic element model. Additionally or alternatively, in some such embodiments of the example computer-implemented method, the corrective bonuses blending pool tank dynamic element model is based at least in part on a linear bonus factor or a polynomial bonus factor.

Additionally or alternatively, in some embodiments of the example computer-implemented method, the non-buffer dynamic element model is a linear blending non-buffer dynamic element model, index blending non-buffer dynamic element model, corrective bonuses blending non-buffer dynamic element model, or a non-linear blending non-buffer dynamic element model. Additionally or alternatively, in some such embodiments of the example computer-implemented method, corrective bonuses blending non-buffer dynamic element model is based at least in part on a linear bonus factor or a polynomial bonus factor.

Additionally or alternatively, in some embodiments of the example computer-implemented method, the heel volume dynamic element model is a linear blending heel volume dynamic element model, index blending heel volume dynamic element model, corrective bonuses blending heel volume dynamic element model, or a non-linear blending heel volume dynamic element model. Additionally or alternatively, in some such embodiments of the example computer-implemented method, the corrective bonuses blending heel volume dynamic element model is based at least in part on a linear bonus factor or a polynomial bonus factor.

Additionally or alternatively, in some embodiments of the example computer-implemented method, the example computer-implemented method further includes generating a plurality of predicted blending elements, the plurality of predicted blending elements comprising at least (i) a first predicted blending element corresponding to a first model of the pool tank dynamic element model, the non-buffer dynamic element model, or the heel volume dynamic element model, and (ii) a second predicted blending element corresponding to a different, second model of the pool tank dynamic element model, the non-buffer dynamic element model, or the heel volume dynamic element model.

Additionally or alternatively, in some embodiments of the example computer-implemented method, the example computer-implemented method further includes generating a plurality of different predicted blending elements, where each predicted blending element of the plurality of different predicted blending elements corresponds to a particular model type utilized to generate that predicted blending element.

Additionally or alternatively, in some embodiments of the example computer-implemented method, the example computer-implemented method further includes generating a plurality of different predicted blending elements using a combination of the pool tank dynamic element model, the non-buffer dynamic element model, and the heel volume dynamic element model, and operating at least one physical component of a processing plant based on the at least one predicted blending element.

Additionally or alternatively, in some embodiments of the example computer-implemented method, the pool tank dynamic element model is derived from a Laplace transform of a flow mass balance equation and a linear element blending equation.

In accordance with a second aspect of the disclosure, an apparatus for modeling of predicted blending element(s) is provided. In one example embodiment, the apparatus includes at least one processor and at least one memory that includes computer-coded instructions stored thereon that, in execution with the at least one processor, causes the apparatus to perform any one of the example computer-implemented methods described herein. In another example embodiment, the apparatus includes means for performing each step of any one of the example computer-implemented methods described herein.

In accordance with a third aspect of the disclosure, a computer program product for modeling of predicted blending element(s) is provided. In one example embodiment, the computer program product includes at least one non-transitory computer-readable storage medium having computer program code stored thereon that, in execution with at least one processor, configures the computer program product for performing any one of the example computer-implemented methods described herein.

It should be appreciated that any and/or all aspects and/or operations of the example computer-implemented methods described herein may be combinable with any other of the aspects and/or operations of any other of the example computer-implemented methods described herein.

BRIEF DESCRIPTION OF THE DRAWINGS

Having thus described the embodiments of the disclosure in general terms, reference now will be made to the accompanying drawings, which are not necessarily drawn to scale, and wherein:

FIG. 1 illustrates a block diagram of a system that may be specially configured within which embodiments of the present disclosure may operate;
FIG. 2 illustrates a block diagram of an example apparatus that may be specially configured in accordance with an example embodiment of the present disclosure;
FIG. 3 illustrates an example layout of a processing plant in accordance with at least one example embodiment of the present disclosure;
FIG. 4 illustrates an example visualization of a pool tank dynamic element model in accordance with at least one example embodiment of the present disclosure;
FIG. 5 illustrates an example visualization of a non-buffer dynamic element model in accordance with at least one example embodiment of the present disclosure;

FIG. 6 illustrates an example visualization of a heel volume dynamic element model in accordance with at least one example embodiment of the present disclosure;

FIG. 7 illustrates an example data structure linking different predicted blending elements with different model types in accordance with at least one example embodiment of the present disclosure;

FIG. 8 illustrates a flowchart including example operations of an example process for modeling of predicted blending elements in accordance with at least one example embodiment of the present disclosure; and

FIG. 9 illustrates a flowchart including example operations of an example process for controlling operation of a processing plant based at least in part on at least one predicted blending element in accordance with at least one example embodiment of the present disclosure.

## DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

Blending is often important in operating a processing plant. For example, blending of input products associated with one or more types of input component(s) may be performed to produce a particular final product. The characteristics of the blended product define what the final product is or how the final product may be classified. For example, a premium gasoline has different values for particular characteristics than a diesel product. In this regard, predicting characteristics of a final product that will be produced from a particular combination of inputs is similarly important to ensure that the produced final product meets particular characteristic specifications, for example such that the desired final product is produced.

Embodiments of the present disclosure provide for improved modeling of predicted blending elements, for example representing values for quality characteristics of a final product. Embodiments provide unified modeling methodology/methodologies for such predicted blending elements in a flowsheet model, for example to utilize during plantwide optimization of a processing plant. The unified modeling methodologies described herein are capable of accurately modeling such predicted blending elements for handling multiple contexts of input components, blending component operations, and the like. Some such embodiments provide for use of any of a myriad of model types that enables generation of the at least one predicted blending element in various configurations and types of components. In this regard, such embodiments more accurately generate predicted blending elements for any of such configurations of components and/or input products.

### Definitions

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

The term "processing plant" any building, complex, or arrangement of components that perform a chemical, physical, electrical, or mechanical process for converting input materials into one or more output products. Non-limiting examples of a processing plant include a chemical processing plant and an oil refinery.

The term "physical component" with respect to a processing plant refers to a real-world machine, tank, pipe, or other physical structure within the processing plant that is utilized in a process performed by the processing plant. In an example context of an oil refinery plant, non-limiting examples of a physical component include a component storage tank, a blender, a product tank, a pump, a heat exchanger, a pressure vessel, a pipe or piping system, and a valve.

The term "operation" with respect to a component refers to one or more behavior(s), process(es), and/or action(s) performed by the component.

The term "blending element" refers to a value corresponding to a property of a product within a physical component that is affected by a plurality of inputs to the physical component.

The term "predicted blending element" refers to a predicted value for a blending element that is outputted via at least one model as described herein.

The term "target time interval" refers to electronically managed data representing a length of time over which a quantity of products is to be produced.

The term "optimized product distribution" refers to one or more allocations of product(s) to be produced over a particular period of time that optimizes one or more target parameter(s).

The term "plant-wide optimization process" refers to at least one computer-implemented process that generates an optimized product distribution for a particular target time interval.

The term "pool tank dynamic element model" refers to at least one statistical, algorithmic, and/or machine learning model that generates predicted blending element(s) for a product produced within a pool tank based on a plurality of flows input to the pool tank.

The term "linear blending pool tank dynamic element model" refers to a pool tank dynamic element model that is based at least in part on a linear function.

The term "index blending pool tank dynamic element model" refers to a pool tank dynamic element model that is based at least in part on an index function.

The term "corrective bonuses blending pool tank dynamic element model" refers to a pool tank dynamic element model that is based at least in part on a corrective bonus factor.

The term "non-linear blending pool tank dynamic element model" a pool tank dynamic element model that is based at least in part on a non-linear function.

The term "non-buffer dynamic element model" refers to at least one statistical, algorithmic, and/or machine learning model that generates predicted blending element(s) for a product produced within a physical component without a buffer tank. Non-limiting examples of a physical component without a buffer tank include a pipe with an effective volume approaching zero for blending.

The term "linear blending non-buffer dynamic element model" refers to a non-buffer dynamic element model that is based at least in part on a linear function.

The term "index blending non-buffer dynamic element model" refers to a non-buffer dynamic element model that is based at least in part on an index function.

The term "corrective bonuses blending non-buffer dynamic element model" refers to a non-buffer dynamic element model that is based at least in part on a corrective bonus factor.

The term "non-linear blending non-buffer dynamic element model" refers to a non-buffer dynamic element model that is based at least in part on a non-linear function.

The term "heel volume dynamic element model" refers to at least one statistical, algorithmic, and/or machine learning model that generates predicted blending element(s) for a product produced within a physical component having an existing heel of product.

The term "linear blending heel volume dynamic element model" refers to a heel volume dynamic element model based at least in part on a linear function.

The term "index blending heel volume dynamic element model" refers to a heel volume dynamic element model based at least in part on an index function.

The term "corrective bonuses blending heel volume dynamic element model" refers to a heel volume dynamic element model based at least in part on a corrective bonus factor.

The term "non-linear blending heel volume dynamic element model" refers to a heel volume dynamic element model based at least in part on a non-linear function.

The term "model type" refers to electronically managed data representing a particular classification of model representing a pool tank dynamic element model, a non-buffer dynamic element model, or a heel volume dynamic element model.

The term "flow mass balance equation" refers to a function that generates a change in product volume and/or a blending element of a product based on input(s) to a physical component and/or output(s) from the physical component.

The term "linear element blending equation" refers to a linear blending law representing a change in at least one blending element of a product produced via a physical component.

## EXAMPLE SYSTEMS AND APPARATUSES OF THE DISCLOSURE

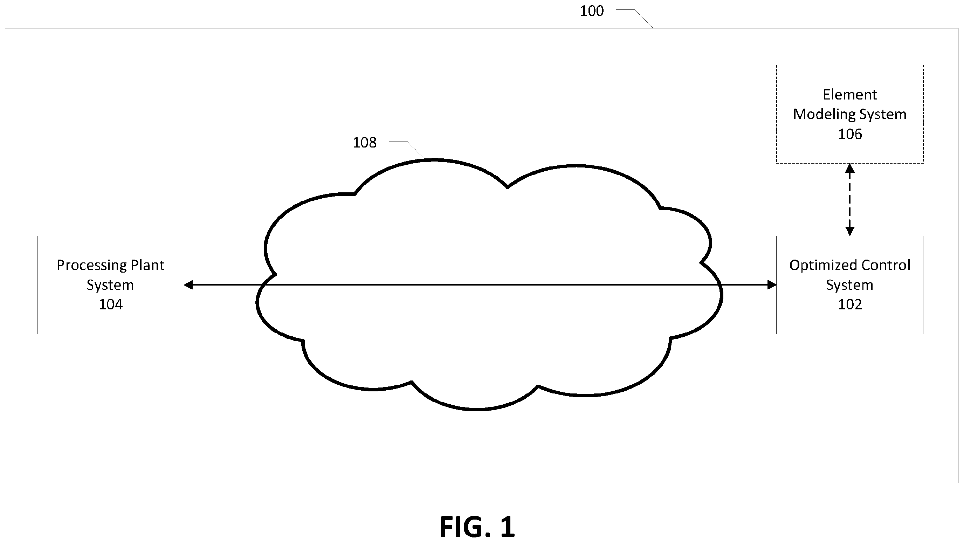

FIG. 1 illustrates a block diagram of a system that may be specially configured within which embodiments of the present disclosure may operate. Specifically, FIG. 1 depicts an example system 100. As illustrated, the system 100 includes a processing plant system 104, in communication with an optimized control system 102 and optionally an element modeling system 106. In some embodiments, the element modeling system 106 is embodied by or as a subsystem of the optimized control system 102. In some embodiments, the processing plant system 104 communicates with the optimized control system 102 and/or the element modeling system 106 over one or more communication network(s), for example a communication network 108.

It should be appreciated that the communications network 108 in some embodiments is embodied in any of a myriad of network configurations. In some embodiments, the communications network 108 embodies a public network (e.g., the Internet). In some embodiments, the communications network 108 embodies a private network (e.g., an internal localized, or closed-off network between particular devices). In some other embodiments, the communications network 108 embodies a hybrid network (e.g., a network enabling internal communications between particular connected devices and external communications with other devices). The communications network 108 in some embodiments includes one or more base station(s), relay(s), router(s), switch(es), cell tower(s), communications cable(s) and/or associated routing station(s), and/or the like. In some embodiments, the communications network 108 includes one or more user controlled computing device(s) (e.g., a user owned router and/or modem) and/or one or more external utility devices (e.g., Internet service provider communication tower(s) and/or other device(s)).

Each of the components of the system 100 communicatively coupled to transmit data to and/or receive data from one another over the same or different wireless and/or wired networks embodying the communications network 108. Such configuration(s) include, without limitation, a wired or wireless Personal Area Network (PAN), Local Area Network (LAN), Metropolitan Area Network (MAN), Wide Area Network (WAN), and/or the like. Additionally, while FIG. 1 illustrate certain system entities as separate, standalone entities communicating over the communications network 108, the various embodiments are not limited to this architecture. In other embodiments, one or more computing entities share one or more components, hardware, and/or the like, or otherwise are embodied by a single computing device such that connection(s) between the computing entities are over the communications network 108 are altered and/or rendered unnecessary. For example, in some embodiments, the processing plant system 104 includes some or all of the optimized control system 102, such that an external communications network 108 is not required.

In some embodiments, the processing plant system 104 and the optimized control system 102 are embodied in an on-premises system within or associated with the processing plant. In some such embodiments, the processing plant system 104 and the optimized control system 102 are communicatively coupled via at least one wired connection. Alternatively or additionally, in some embodiments, the processing plant system 104 embodies or includes the optimized control system 102, for example as a software component of a single enterprise terminal.

The processing plant system 104 includes any number of computing device(s), system(s), physical component(s), and/or the like, that facilitates producing of any number of products, for example utilizing particular configurations that cause processing of particular inputs available within the processing plant system 104. In some embodiments, the processing plant system 104 includes one or more physical component(s), connection(s) between physical component(s), and/or computing system(s) that control operation of each physical component therein. In one example context, the processing plant system 104 embodies an oil refinery, which includes physical component(s) embodying rundown blender(s), batch blender(s), product tank(s), or other component(s) that perform particular process(es) to alter properties of inputs to the component, crude flow unit(s), piping between such physical component(s), valve(s) controlling flow between the physical component(s), and/or the like. Additionally or alternatively, in some embodiments the processing plant system 104 includes one or more computing system(s) that are specially configured to operate the physical component(s) in a manner that produces one or more particular product(s) simultaneously. In some embodiments, a processing plant system 104 includes one or more computing device(s) and/or system(s) embodied in hardware, software, firmware, and/or a combination thereof, that configure and/or otherwise control operation of one or more physical component(s) in the processing plant. For example, in some embodiments, such computing device(s) and/or system(s) include one or more programmable logic controller(s), MPC(s), application server(s), centralized control system(s), and/or the like, that control(s) configuration and/or operation of at least one physical component. It will be appreciated that different processing plant system(s) may include or otherwise be associated with different physical component(s), computing system(s), and/or the like. For example, different refinery plants may include different components, different number of components, different types of components, and/or the like, that cause the processing plant system to operate differently from other processing plants.

The optimized control system 102 includes one or more computing device(s) and/or system(s) embodied in hardware, software, firmware, and/or a combination thereof, that generate one mor more predicted blending element(s), for example associated with a final product produced from a combination of input product(s). In some embodiments, the optimized control system 102 generates predicted blending element(s) for a particular tank producing a particular final product utilizing one or more specially-trained model(s), for example a pool tank dynamic element model, a non-buffer dynamic element model, or a heel volume dynamic element model. In some embodiments, the optimized control system 102 includes one or more application server(s) and/or database server(s) that provide such functionality. Alternatively or additionally, in some embodiments, the optimized control system 102 includes one or more client device(s), user device(s), and/or the like, that enable access to the functionality provided via the optimized control system 102, for example via a web application, a native application, and/or the like executed on the client device.

In some embodiments, the optimized control system 102 is configured to perform a unified modeling methodology that predicts blending elements associated with a tank producing a particular final product based at least in part on one or more input product(s) inputted to the tank. For example, in some embodiments, the optimized control system 102 is configured to identify a particular model for use associated with a particular tank, for example based at least in part on a tank type, characteristics of the tank, characteristics of input product(s), and/or characteristics of input physical component(s). Additionally or alternatively, in some embodiments, the optimized control system 102 is configured to output the at least one predicted blending element. Additionally or alternatively, in some embodiments, the optimized control system 102 is utilized to control operation of one or more physical component(s) in a processing plant. In some embodiments, the optimized control system 102 includes or embodies a display or other user interface to which a user-facing interface is renderable.

In some embodiments, the optimized control system 102 and/or processing plant system 104 communicate with one another to perform the various actions described herein. For example, in some embodiments, the optimized control system 102 and the processing plant system 104 communicate to generate predicted blending element(s) associated with operation of a particular processing plant, or particular sub-components thereof. Additionally or alternatively, in some embodiments, the optimized control system 102 and the processing plant system 104 communicate to facilitate control or adjustment of operation of physical component(s) in the processing plant based at least in part on the generated predicted blending element(s). For example, in some embodiments the optimized control system 102 and the processing plant system 104 communicate to configure one or more physical component(s) of the processing plant to ensure production of particular product(s) having particular qualities defined by particular blending elements based at least in part on the predicted blending element(s).

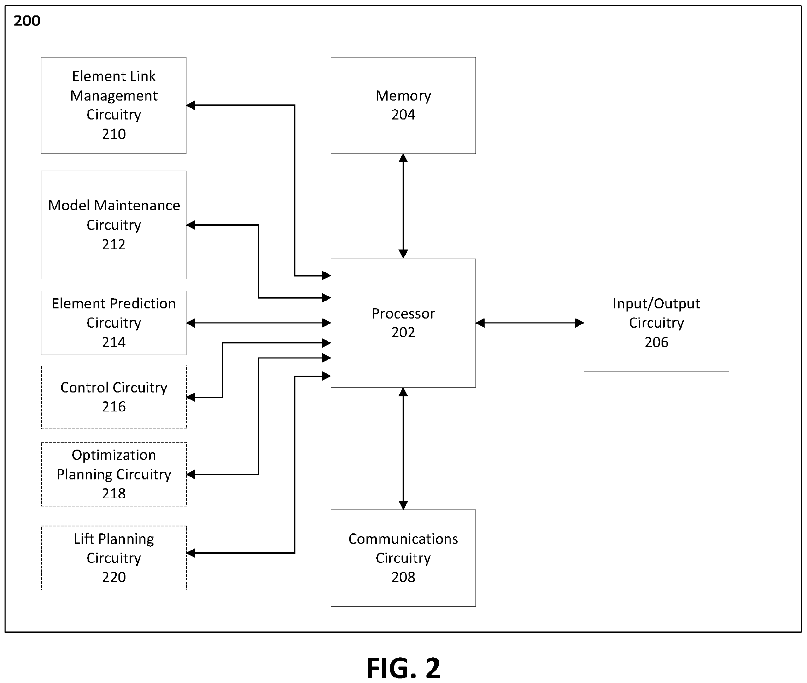

FIG. 2 illustrates a block diagram of an example apparatus that may be specially configured in accordance with an example embodiment of the present disclosure. Specifically, FIG. 2 depicts an example unified modeling apparatus 200 ("apparatus 200") specially configured in accordance with at least some example embodiments of the present disclosure. In some embodiments, the optimized control system 102, the element modeling system 106, and/or a portion thereof is embodied by one or more system(s), such as the apparatus 200 as depicted and described in FIG. 2. The apparatus 200 includes processor 202, memory 204, input/output circuitry 206, communications circuitry 208, element link management circuitry 210, model maintenance circuitry 212, element prediction circuitry 214, optional control circuitry 216, optional optimization planning circuitry 218, and/or lift planning circuitry 220. In some embodiments, the apparatus 200 is configured, using one or more of the sets of circuitry 202, 204, 206, 208, 210, 212, 214, 216, 218, and/or 220, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In one embodiment, these functions, operations, and/or processes can be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the apparatus 200 provide or supplement the functionality of another particular set of circuitry. For example, the processor 202 in some embodiments provides processing functionality to any of the sets of circuitry, the memory 204 provides storage functionality to any of the sets of circuitry, the communications circuitry 208 provides network interface functionality to any of the sets of circuitry, and/or the like.

In some embodiments, the processor 202 (and/or co-processor or any other processing circuitry assisting or otherwise associated with the processor) is/are in communication with the memory 204 via a bus for passing information among components of the apparatus 200. In some embodiments, for example, the memory 204 is non-transitory and may include, for example, one or more volatile and/or non-volatile memories. In other words, for example, the memory 204 in some embodiments includes or embodies an electronic storage device (e.g., a computer readable storage medium). In some embodiments, the memory 204 is configured to store information, data, content, applications, instructions, or the like, for enabling the apparatus 200 to carry out various functions in accordance with example embodiments of the present disclosure.

The processor 202 may be embodied in a number of different ways. For example, in some example embodiments, the processor 202 includes one or more processing devices configured to perform independently. Additionally or alternatively, in some embodiments, the processor 202 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 202 is configured to execute instructions stored in the memory 204 or otherwise accessible to the processor. Alternatively or additionally, the processor 202 in some embodiments is configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Alternatively or additionally, as another example in some example embodiments, when the processor 202 is embodied as an executor of software instructions, the instructions specifically configure the processor 202 to perform the algorithms embodied in the specific operations described herein when such instructions are executed.

As one particular example embodiment, the processor 202 is configured to perform various operations associated with generating predicted blending elements using at least one specially configured model. In some embodiments, the processor 202 includes hardware, software, firmware, and/or a combination thereof, that identifies input blending element(s) associated with a plurality of input product(s). Additionally or alternatively, in some embodiments, the processor 202 includes hardware, software, firmware, and/or a combination thereof, that generates at least one predicted blending element associated with a tank utilizing a pool tank dynamic element model, a non-buffer dynamic element model, and/or a heel volume dynamic element model. In some embodiments, the pool tank dynamic element model, non-buffer dynamic element model, and/or heel volume dynamic element model generates at least one predicted blending element based at least in part on input blending element(s) associated with a plurality of input product(s). Additionally or alternatively, in some embodiments, the processor 202 includes hardware, software, firmware, and/or a combination thereof, that outputs the at least one predicted blending element. Additionally or alternatively, in some embodiments, the processor 202 includes hardware, software, firmware, and/or a combination thereof, that controls at least one physical component based at least in part on the at least one predicted blending element. Additionally or alternatively, in some embodiments, the processor 202 includes hardware, software, firmware, and/or a combination thereof, that generates or otherwise configures a lift schedule based at least in part on the at least one predicted blending element and/or control of one or more physical component(s) of a processing plant based at least in part on the at least one predicted blending element.

In some embodiments, the apparatus 200 includes input/output circuitry 206 that provides output to the user and, in some embodiments, to receive an indication of a user input. In some embodiments, the input/output circuitry 206 is in communication with the processor 202 to provide such functionality. The input/output circuitry 206 may comprise one or more user interface(s) and in some embodiments includes a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a client device and/or other display associated with a user.

In some embodiments, the apparatus 200 includes communications circuitry 208. The communications circuitry 208 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 208 includes, for example, a network interface for enabling communications with a wired or wireless communications network. Additionally or alternatively in some embodiments, the communications circuitry 208 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 208 includes circuitry for interacting with the antenna(s) and/or other hardware or software to cause transmission of signals via the antenna(s) or to handle receipt of signals received via the antenna(s). In some embodiments, the communications circuitry 208 enables transmission to and/or receipt of data from user device, one or more asset(s) or accompanying sensor(s) , and/or other external computing device in communication with the apparatus 200.

The element link management circuitry 210 includes hardware, software, firmware, and/or a combination thereof, that supports identifying and/or retrieving of a particular model utilized in generating at least one predicted blending element. For example, in some embodiments, the element link management circuitry 210 includes hardware, software, firmware, and/or a combination thereof, that determines a particular model for use in generating a particular predicted blending element. Additionally or alternatively, in some embodiments, the element link management circuitry 210 includes hardware, software, firmware, and/or a combination thereof, that determines a particular model for use in generating a particular predicted blending element of a particular blending element type. Additionally or alternatively, in some embodiments, the element link management circuitry 210 includes hardware, software, firmware, and/or a combination thereof, that determines a particular model for use in generating a particular predicted blending element based at least in part on a blending element type associated with one or more input product(s). Additionally or alternatively, in some embodiments, the element link management circuitry 210 includes hardware, software, firmware, and/or a combination thereof, that determines a particular model for use in generating a particular predicted blending element based at least in part on at least one characteristic of a tank utilized to generate a final product. In some embodiments, the element link management circuitry 210 includes a separate processor, specially configured field programmable gate array (FPGA), or a specially programmed application specific integrated circuit (ASIC).

The model maintenance circuitry 212 includes hardware, software, firmware, and/or a combination thereof, that supports configuration of one or more model(s) utilized to generate predicted blending element(s) for one or more physical component(s) producing a physical product. For example, in some embodiments, the model maintenance circuitry 212 includes hardware, software, firmware, and/or a combination thereof, that stores at least one model for use. In some embodiments, the model maintenance circuitry 212 stores at least a pool tank dynamic element model, a non-buffer dynamic element model, and/or a heel volume dynamic element model. Alternatively or additionally, in some embodiments, the model maintenance circuitry 212 includes hardware, software, firmware, and/or a combination thereof, that stores different version(s) of one or more model(s). In some embodiments, the model maintenance circuitry 212 stores at least a linear blending pool tank dynamic element model, an index blending pool tank dynamic element model, a corrective bonuses blending pool tank dynamic element model, a non-linear blending pool tank dynamic element model, a linear blending non-buffer dynamic element model, index blending non-buffer dynamic element model, corrective bonuses blending non-buffer dynamic element model, a non-linear blending non-buffer dynamic element model, a linear blending heel volume dynamic element model, index blending heel volume dynamic element model, corrective bonuses blending heel volume dynamic element model, and/or a non-linear blending heel volume dynamic element model. In some embodiments, the model maintenance circuitry 212 includes a separate processor, specially configured field programmable gate array (FPGA), or a specially programmed application specific integrated circuit (ASIC).

The element prediction circuitry 214 includes hardware, software, firmware, and/or a combination thereof, that supports generation of at least one predicted blending element utilizing at least one model. For example, in some embodiments, the element prediction circuitry 214 includes hardware, software, firmware, and/or a combination thereof, that receives input blending elements associated with one or more input physical component(s) and/or input product(s). Alternatively or additionally, in some embodiments, the element prediction circuitry 214 includes hardware, software, firmware, and/or a combination thereof, that generates at least one predicted blending element associated with a particular physical component, for example a tank producing a particular final product, utilizing at least one model. In some embodiments, the element prediction circuitry 214 utilizes a pool tank dynamic element model, a non-buffer dynamic element model, or a heel volume dynamic element model. In some such embodiments, the element prediction circuitry 214 utilizes input blending element(s) as input to the one or more model(s). Alternatively or additionally, in some embodiments, the element prediction circuitry 214 includes hardware, software, firmware, and/or a combination thereof, that generates a plurality of predicted blending elements utilizing a different model corresponding to each particular predicted blending element. Alternatively or additionally, in some embodiments, the element prediction circuitry 214 includes hardware, software, firmware, and/or a combination thereof, that outputs the at least one predicted blending element. In some embodiments, the element prediction circuitry 214 includes a separate processor, specially configured field programmable gate array (FPGA), or a specially programmed application specific integrated circuit (ASIC).

The optional control circuitry 216 includes hardware, software, firmware, and/or a combination thereof, that supports various functionality associated with causing configuration or other causing operation of at least one physical component of a processing plant. For example, in some embodiments, the control circuitry 216 includes hardware, software, firmware, and/or a combination thereof, that causes operation of a physical component based at least in part on at least one predicted blending element. Additionally or alternatively, in some embodiments, the control circuitry 216 includes hardware, software, firmware, and/or a combination thereof, that causes operation of a plurality of physical components based at least in part on at least one predicted blending element. Additionally or alternatively, in some embodiments, the control circuitry 216 includes hardware, software, firmware, and/or a combination thereof, that configures at least one physical component of a processing plant to produce a plurality of optimized amounts corresponding to a plurality of products over a particular time interval, for example defined based at least in part on a performed optimization process and/or at least one predicted blending element. In some embodiments, the control circuitry 216 includes a separate processor, specially configured field programmable gate array (FPGA), or a specially programmed application specific integrated circuit (ASIC).

The optional optimized planning circuitry 218 includes hardware, software, firmware, and/or a combination thereof, that supports various functionality associated with performing an optimization process. In some embodiments, for example, the optimization process generates at least one optimized operational parameter indicating a particular final product to be produced, and/or target amount of at least one product to be produced, via one or more physical component(s) of a processing plant over a particular time interval to optimize (e.g., maximize or minimize) one or more target parameter(s). additionally or alternatively, in some embodiments, the optimized planning circuitry 218 includes hardware, software, firmware, and/or a combination thereof, that generates optimized operational parameters representing target amounts of final products to be produced over a particular time interval, for example m-days, to produce a maximized profitability of an oil refinery or other processing plant. Additionally or alternatively, in some embodiments, the optimization planning circuitry 218 includes hardware, software, firmware, and/or a combination thereof, that generates at least one optimized operational parameter based at least in part on at least one predicted blending element generated for a particular physical component, for example a tank of a processing plant. In some embodiments, the optimized planning circuitry 218 includes a separate processor, specially configured field programmable gate array (FPGA), or a specially programmed application specific integrated circuit (ASIC).

The optional lift planning circuitry 220 includes hardware, software, firmware, and/or a combination thereof, that supports various functionality associated with configuring a lift schedule. For example, in some embodiments, the lift planning circuitry 220 includes hardware, software, firmware, and/or a combination thereof, that enables configuration of a lift schedule by assigning a time slices to particular lift of a final product available at that time slice. Additionally or alternatively, in some embodiments, the lift planning circuitry 220 includes hardware, software, firmware, and/or a combination thereof, that enables configuration of the lift schedule based at least in part on the at least one optimized operational parameter and/or at least one predicted blending element. Additionally or alternatively, in some embodiments, the lift planning circuitry 220 includes hardware, software, firmware, and/or a combination thereof, that generates a user-facing interface that enables input of a planned lift (e.g., a scheduled pickup of a particular product) at a particular times slice. In some embodiments, the lift planning circuitry 220 includes a separate processor, specially configured field programmable gate array (FPGA), or a specially programmed application specific integrated circuit (ASIC).

Additionally or alternatively, in some embodiments, two or more of the sets of circuitries 202-220 are combinable. Alternatively or additionally, in some embodiments, one or more of the sets of circuitry perform some or all of the functionality described associated with another component. For example, in some embodiments, two or more of the sets of circuitry 202-220 are combined into a single module embodied in hardware, software, firmware, and/or a combination thereof. Similarly, in some embodiments, one or more of the sets of circuitry, for example the element link management circuitry 210, model maintenance circuitry 212, element prediction circuitry 214, control circuitry 216, optimization planning circuitry 218, and/or lift planning circuitry 220, is/are combined with the processor 202, such that the processor 202 performs one or more of the operations described above with respect to each of these sets of circuitry 210-220.

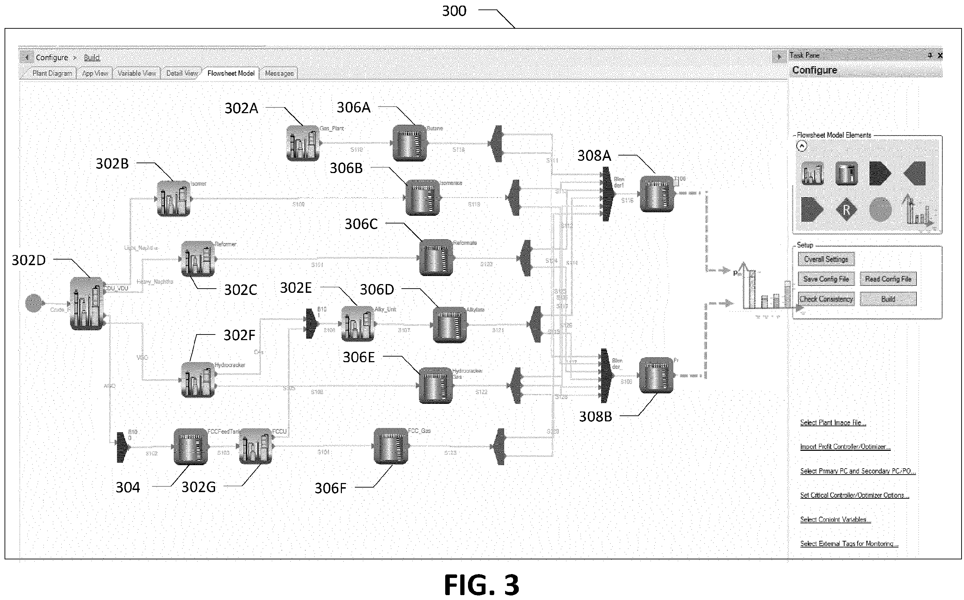

FIG. 3 illustrates an example layout of a processing plant in accordance with at least one example embodiment of the present disclosure. Specifically, FIG. 3 depicts an example representation 300 of a processing plant in a flowsheet model, with each element of the flowsheet model corresponding to a particular physical component and/or virtual component of a processing plant. In this regard, in some embodiments the representation 300 depicts a physical layout and configuration of the particular processing plant, and/or a virtualized abstraction of physical component(s) of a processing plant. As illustrated, the example processing plant is an oil refinery. It will be appreciated that in other embodiments, other processing plants may be utilized.

The representation 300 includes a plurality of representations of components. In some embodiments, each representation is embodied by an element (e.g., an interface element) within the flowsheet model as depicted. Each element may represent a particular physical component within the processing plant itself, or a virtualized abstraction of a physical component operating in a particular mode, for example. Additionally, the flowsheet model may define connections between said components. In this regard, input products may flow between such components based at least in part on such connections, for example for use in producing one or more final product(s) via particular component(s) within the processing plant represented by the representation 300.

As illustrated, the representation 300 includes one or more representation(s) of tank(s) 306A-306F and/or 304, for example each embodying a product tank, and one or more physical representation(s) of processing unit(s) 302A-302G. In some embodiments, the processing units depicted in the representations of processing units 302A-302F source a particular input product, utilize the product as input to a subsequent component, and/or process incoming input products in a particular manner. For example, as illustrated, the representations of processing components 302A-302G includes crude flow units, hydro treating processing units, reforming processing units, isomerization processing units, aromatics reduction processing units, and the like. Such processing units are depicted as connected via physical connections to one or more other upstream and/or downstream unit(s). It will be appreciated that any number, type, and/or configuration of processing units may be included in a particular processing plant.

In some embodiments, one or more of the representation(s) of processing units 302A-302F and/or resulting component tank(s) 306A-306F each flow to one or more particular physical representation(s) of product tank(s) 308A and 308B. In some embodiments, a representation of a product tank, such as 308A and/or 308B, represents a corresponding tank within the processing plant, for example where the physical tank embodies a rundown blender or a batch blender configurable for operation in one or more mode(s). At a particular time slice, the tank may be configured to include or otherwise produce a particular target product, for example based at least in part on input product(s) received via the processing unit(s) represented by the representations of processing units 302A-302G and/or product tank(s) 306A-306F. In some such embodiments, a given tank blends the input products together at particular input flow rate(s), volume(s), and/or the like, resulting in a particular final product having particular blending elements based at least in part on the blending elements of the input products. In this regard, each product tank (or "blender") may serve as a processing unit and/or a final storage for a particular type of final product. Alternatively or additionally, in some embodiments, the product tank(s) may each be associated with one or more product storage tank(s) that each serve as a storage for a particular final product. It will be appreciated that each final product is defined based at least in part on particular values for particular blending elements representing characteristics (or "qualities") of the particular final product.

Some such processing plants do not include intermediary component tanks, for example that store intermediary input components utilized by the product tank(s). In this regard, the processing plant may lack physical component(s) that would serve as a buffer for use in producing and/or storing particular final products, such that the product blender represents the final. In some embodiments, a processing plant utilizing such rundown blending does not include any intermediary storage tank. In other embodiments, a processing plant utilizing rundown blending has some intermediary storage tank(s), but includes a limited amount of intermediary storage tanks. It will be appreciated that different processing plants may include different number, configuration, and/or types of blenders.

EXAMPLE MODELS OF THE DISCLOSURE

Having described example systems, apparatuses, and physical layouts in accordance with the present disclosure, example models of the disclosure will now be discussed. In some embodiments, one or more computing system(s) and/or device(s) is/are specially configured to maintain one or more of the model(s) for use in generating one or more predicted blending element(s). In some embodiments, the model(s) are implemented by and/or otherwise maintained by an optimized control system 102 and/or associated element modeling system 106, for example embodied by the apparatus 200 that maintains the model(s) for use as described herein. In some embodiments, the apparatus 200 determines a particular model to utilize to generate a particular predicted blending element, for example based on a blending element type of the predicted blending element, a tank type associated with the predicted blending element, and/or the like based at least in part on any other data accessible to the apparatus 200 associated with the tank, input product(s) and/or input physical component(s), and/or the like.

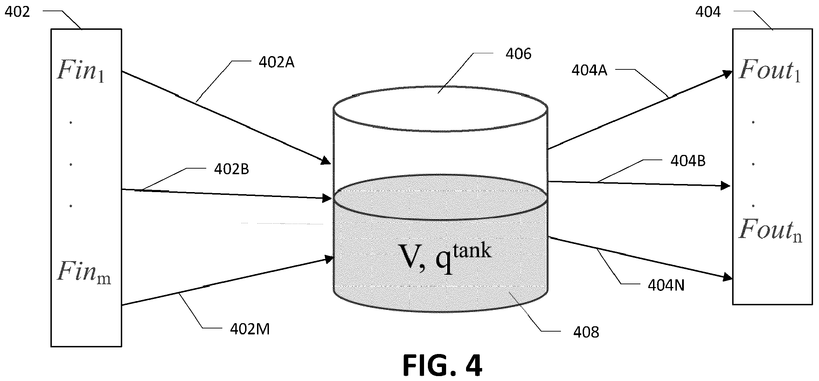

FIG. 4 illustrates an example visualization of a pool tank dynamic element model in accordance with at least one example embodiment of the present disclosure. In some embodiments, the pool dynamic element model is utilized to generate one or more predicted blending element(s) for particular physical component(s) embodying a pool tank 406. The pool tank 406 includes a volume of a particular product 408. The particular product in some embodiments embodies a final product produced via a processing plant. The volume of the particular product 408 is associated with particular blending element(s), for example that embody qualities and/or characteristics of the product. For example, in some embodiments the volume of the particular product 408 has a particular product volume V, representing a volume of the product within the particular pool tank. Additionally, in some embodiments, the volume of the particular product 408 is associated with a particular vector of qualities, q. Each quality may represent a particular blending element of the product, for example a temperature, octane value, and/or other measurable characteristic of the product. It will be appreciated that the blending elements may include any number of qualities.

The pool tank 406 receives any number of input product flows. In some embodiments, the pool tank 406 receives a single input flow. In some embodiments, the pool tank 406 receives a plurality of input flows 402. The input product flows 402 may include any number of input flows of individual input products. For example, in some embodiments, the plurality of input product flows 402 includes an input flow of a first input product 402A, an input flow of a second input product 402B, and so on up to an m'th input flow of a m'th input product 402M. It will be appreciated that each flow of input product may be associated with different blending elements. For example, each input flow of an input product may be associated with a different flow rate F. Additionally, each input flow of an input product may be associated with different blending elements representing different characteristics of the input product. For example, in some embodiments, different input products are associated with different octane values, temperatures, and/or the like, and/or may be associated with different flow rates. In this regard, each input flow of an input product 402A-402M, for example, may differently affect the blending elements and/or volume of the volume of the particular product 408 in the pool tank 406.

Additionally or alternatively, the pool tank 406 outputs any number of output flows. In some embodiments, the pool tank 406 outputs a single output flow. In some embodiments, the pool tank 406 outputs a plurality of output flows 404. The output flows 404 may include any number of output flows of the final product from the pool tank 406. For example, in some embodiments, the plurality of output product flows 404 includes an output flow of a first output product 404A, an output flow of a second output product 404B, and so on up to an n'th output flow of a n'th output product 404N. In some embodiments, the product outputted via each of the output flows 404 is a particular flow rate of the same final product stored via the pool tank 406. In some embodiments, each output flow product flow 404 is associated with a different flow rate. In this regard, each of the output product flows 404 may differently affect the blending elements and/or volume of the volume of the particular product 408 in the pool tank 406.

In some embodiments, predicted blending elements associated with the product in the pool tank 406 may be modeled utilizing any of a myriad of pool tank dynamic element models. In some embodiments, a predicted blending element is generated utilizing a particular pool tank dynamic model corresponding to the predicted blending element to be generated, characteristic(s) of the pool tank 406, and/or the like. In this regard, in some embodiments different model(s) may be utilized to generate different predicted blending elements. In some embodiments, one or more predicted blending element(s) is/are generated utilizing a linear blending pool tank dynamic element model, an index blending pool tank dynamic element model, a corrective bonuses blending pool tank dynamic element model, and/or a non-linear blending pool tank dynamic element model, as described herein.

In some embodiments, the pool tank dynamic element model is based at least in part on a mass balance equation. For example, in some embodiments, the pool tank dynamic element model is generated based at least in part on a mass balance equation embodying Formula 1A:

$$\frac{dV}{dt} = \sum_{i=1}^{m} F_{in_i} - \sum_{i=1}^{n} F_{out_i}$$

In some embodiments, the mass balance equation is usable to derive one or more concentration equation(s). For example, in some embodiments, the following mass balance equation(s) are derivable:

Formula 2A:

$$\frac{d(q_j^{\mathrm{Tan}\,k} V)}{dt} = \sum_{i=1}^{m} q_{j,i} F_{in_i} - q_j^{\mathrm{Tan}\,k} \sum_{i=1}^{n} F_{out_i}$$

Formula 3A:

$$q_j^{\mathrm{Tan}\,k} \frac{dV}{dt} + V \frac{dq_j^{\mathrm{Tan}\,k}}{dt} = \sum_{i=1}^{m} q_{j,i} F_{in_i} - q_j^{\mathrm{Tan}\,k} \sum_{i=1}^{n} F_{out_i}$$

Formula 4A (derived from Formula 1A and Formula 3A):

$$V \frac{dq_j^{\mathrm{Tan}\,k}}{dt} = \sum_{i=1}^{m} (q_{j,i} - q_j^{\mathrm{Tan}\,k}) F_{in_i}$$

Formula 4A represents a linear property blending equation for a particular predicted blending element, for example embodying a linear blending pool tank dynamic element model. In this regard, it will be appreciated that the linear property blending equation is extendable to one or more other type(s) of relationship, for example non-linear, index, bonused, and/or the like.

In some embodiments, a Laplace transform may be applied on both sides of Formula 4A and reorganized to reduce the differential equation and derive the following formulas when reorganized:

Formula 5A:

$$q_j^{\text{tank}}(s) = \frac{\sum_{i=1}^{m} q_{j,i} F_{in_i}}{V \cdot s + \sum_{i=1}^{m} F_{in_i}} = \frac{1}{\tau_v \cdot s + 1}\left(\frac{\sum_{i=1}^{m} q_{j,i} F_{in_i}}{\sum_{i=1}^{m} F_{in_i}}\right)$$

Formula 6A:

$$V(s) = \frac{1}{s}\left(\sum_{i=1}^{m} F_{in_i} - \sum_{i=1}^{n} F_{out_i}\right)$$

$$\tau_v = \frac{V}{sum(F_{in})}$$

where $\qquad\qquad$ , and $\quad sum(F_{in}) = \sum_{i=1}^{m} F_{in_i}$ .

In this regard, utilizing Formulas 5A and 6A, a value for a particular predicted blending element represented

by $\quad q_j^{\text{tank}}(s) \quad$ is determinable for any number of predicted blending elements. It will be appreciated that Formula 5A in some embodiments is based on a linear blending law, for example Formula 7A:

$$\cdot\left(\frac{\sum_{i=1}^{m} q_{j,i} F_{in_i}}{\sum_{i=1}^{m} F_{in_i}}\right)$$

In other contexts, for example for particular blending element(s) that do not follow linear relationship(s), another blending law may be utilized. For example, in some embodiments, an index blending law, non-linear blending law, and/or the like may be utilized.

For example, in some embodiments, the Formulas 5A and 6A are extendable to index blending, representing a prediction of a particular non-linear blending element. In some embodiments, the non-linear blending element is generated utilizing a non-linear and/or index blending pool tank dynamic element model. Such Formulas in some embodiments embody an index blending pool tank dynamic element model. Given a particular index function f(o), for example, and its inverse f⁻¹(o), the following Formula may be derived for use in predicting indexable blending elements:

Formula 8A:

$$p_j^{\text{tank}}(s) = \frac{1}{\tau_v \cdot s + 1} f^{-1} \left( \frac{\displaystyle\sum_{i=1}^{m} f(q_{j,i}) F_{in_i}}{\displaystyle\sum_{i=1}^{m} F_{in_i}} \right)$$

Additionally or alternatively, in some embodiments the Formulas 5A and 6A are extendable to corrective bonus blending, representing a prediction of a particular blending element modeled utilizing a corrective bonus. In some such embodiments, the Formula(s) embody a corrective bonus blending pool tank dynamic element model for modeling one or more predicted blending element. For example, the following formula may be derived for use in predicting corrective bonus blending elements:

Formula 9A:

$$p_j^{\text{tank}}(s) = \frac{1}{\tau_v \cdot s + 1} \left( \frac{\displaystyle\sum_{i=1}^{m} q_{j,i} F_{in_i} + \sum_{i,k=1}^{m} b_{i,k} F_{in_i} F_{in_k}}{\displaystyle\sum_{i=1}^{m} F_{in_i}} \right)$$

It will be appreciated that in other embodiments, another corrective bonus may be utilized. As depicted, Formula 8A utilizes a binomial bonus of:

$$\sum_{i,k=1}^{m} b_{i,k} F_{in_i} F_{in_k}$$

In some embodiments, a linear bonus may be applied within the formula. In other embodiments, a quadratic or other corrective bonus factor definition is applied. In some such embodiments, the corrective bonus factor is determinable based at least in part on the particular predicted blending element to be generated via the model.
The above Formulas are further generalizable to a formula embodying a general non-linear blending pool tank dynamic element model. For example, in some embodiments at least one predicted blending element or a plurality of predicted blending elements follow(s) a non-linear and non-index function in the pool tank 406. In this regard, the Formulas 5A and 6A are similarly extendable to such generalized non-linear blending for the pool tank 406, which follows any generalized, non-linear and non-indexable function $f(x)$:

Formula 10A:

$$q_j^{\text{tank}}(s) = \frac{1}{\tau_v \cdot s + 1} f(F_{in}, q_1, ..., q_n)$$

where Fin is the flow vector into the pool tank. Additionally, qi is the vector of blending elements (e.g., qualities) associated with the i-th component of the flow vector $F_{in}$.
It should be appreciated that, in some embodiments, different model(s) are utilized to model different predicted blending elements associated with a particular product in a pool tank. For example, in some embodiments, a first predicted blending element is modeled utilizing a linear blending pool tank dynamic element model, a second predicted blending element modeled utilizing an index blending pool tank dynamic element model, a third predicted blending element modeled utilizing a corrective bonuses blending pool tank dynamic element model, and/or a fourth predicted blending element utilizing a non-linear blending pool tank dynamic element model.

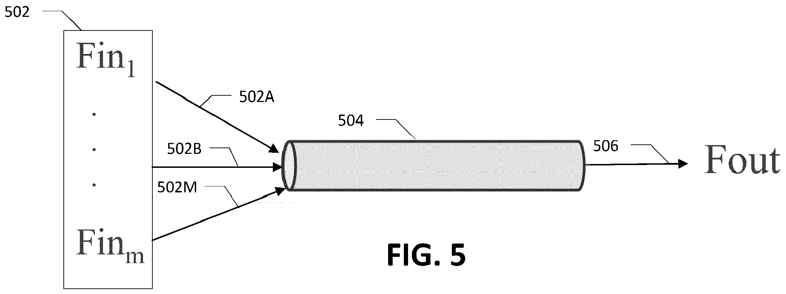

The models depicted and described with respect to FIG. 4 are extendable to one or more other model type(s) utilized for modeling predicted blending elements associated with one or more other tank type(s). In this regard, the model is extendable to one or more asymptomatic variant(s) for other configuration(s) of physical component(s). For example, FIG. 5 illustrates an example visualization of a non-buffer dynamic element model in accordance with at least one example embodiment of the present disclosure. In some embodiments, the non-buffer dynamic element model is utilized to generate one or more predicted blending element(s) for particular physical component(s) embodying an inline blender (e.g., without a buffer tank, and/or where the volume of a particular tank approaches a mixing volume of 0, for example the non-buffer inline tank 504. The particular non-buffer inline tank 504 in some embodiments creates a final product produced via a processing plant, and/or blends one or more intermediary input product(s) flowing to a product tank of the processing plant. It will be appreciated that the flow of product through the non-buffer inline tank 504 may similarly be associated with a particular vector of qualities, q. Each quality may represent a particular blending element of a product, for example a temperature, octane value, and/or other measurable characteristic of the product. It will be appreciated that the blending elements associated with the product blended in the non-buffer inline tank 504 may include any number of qualities.

The non-buffer inline tank 504 receives any number of input product flows. In some embodiments, the non-buffer inline tank 504 receives a single input flow. In some embodiments, the non-buffer inline tank 504 receives a plurality of input flows 502. The input product flows 502 may include any number of input flows of individual input products. For example, in some embodiments, the plurality of input product flows 502 includes an input flow of a first input product 502A, an input product flow of a second input product 502B, and so on up to an m'th input flow of a m'th input product 502M. It will be appreciated that each flow of input product may be associated with different blending elements. For example, each input flow of an input product may be associated with a different flow rate F. Additionally, each input flow of an input product may be associated with different blending elements representing different characteristics of the input product. For example, in some embodiments, different input products are associated with different octane values, temperatures, and/or the like, and/or may be associated with different flow rates. In this regard, each input flow of an input product 502A-502M, for example, may differently affect the blending elements and/or volume of an output product from the non-buffer inline tank 504.

Additionally or alternatively, in some embodiments, the non-buffer inline tank 504 outputs a particular product output flow 506. In some embodiments, the non-buffer inline tank 504 outputs a single output flow. The particular product output flow 506 may embody a flow of a particular final product produced via the non-buffer inline tank 504, for example for outputting to a product tank and/or for shipping out from the processing plant. In this regard, the product output flow 506 may affect the blending elements of the product within the non-buffer inline tank 504.

In some embodiments, predicted blending elements associated with the product in the non-buffer inline tank 504 may be modeled utilizing any of a myriad of non-buffer dynamic element models. In some embodiments, a predicted blending element is generated utilizing a particular non-buffer dynamic element model corresponding to the predicted blending element to be generated, characteristic(s) of the non-buffer inline tank 504, and/or the like. In this regard, in some embodiments, different model(s) may be utilized to generate different predicted blending elements. In some embodiments, one or more predicted blending element(s) is/are generated utilizing a non-buffer dynamic element model, an index non-buffer dynamic element model, a corrective bonuses non-buffer dynamic element model, and/or a non-linear non-buffer dynamic element model, as described herein.

In some embodiments, the non-buffer dynamic element model may model predicted blending element(s) utilizing the Formula 7A as described above. For example, the linear non-buffer dynamic element model may be derived based on the linear law and/or mass balance equations described herein, such as to derive Formula 7B:

$$q_j^{\text{inline}} = \frac{\sum\limits_{i=1}^{m} q_{j,i} F_{in_i}}{\sum\limits_{i=1}^{m} F_{in_i}}$$

In other contexts, for example for particular blending element(s) that do not follow linear relationship(s), another blending law may be utilized. For example, in some embodiments, an index blending law, non-linear blending law, and/or the like may be utilized.

The Formula 7B is similarly extendable to index blending, representing a prediction of a particular non-linear blending element. In some embodiments, the non-linear blending element is generated utilizing an index and/or non-linear non-buffer dynamic element model. Given a particular f(q), for example, and its inverse f$^{-1}$(o), the following Formula 8B may be derived for use in predicting indexable blending elements associated with the non-buffer inline tank 504:

Formula 8B:

$$q_j^{\text{inline}} = f^{-1}\left( \frac{\sum_{i=1}^{m} f(q_{j,i}) F_{in_i}}{\sum_{i=1}^{m} F_{in_i}} \right)$$

Additionally or alternatively, in some embodiments, the Formulas are extendable to corrective bonus blending, representing a prediction of a particular blending element utilizing a corrective bonus for the non-buffer inline tank 504. In some such embodiments, the Formula(s) embody a corrective bonus blending non-buffer dynamic element model. For example, the following Formula may be derived for use in predicting corrective bonus blending elements:

Formula 9B:

$$q_j^{\text{inline}} = \frac{\sum_{i=1}^{m} q_{j,i} F_{in_i} + \sum_{i,k=1}^{m} b_{i,k} F_{in_i} F_{in_k}}{\sum_{i=1}^{m} F_{in_i}}$$

It will be appreciated that, as described above, in other embodiments another corrective bonus may be utilized. As depicted, Formula 8B utilizes a bonus of:

$$\sum_{i,k=1}^{m} b_{i,k} F_{in_i} F_{in_k}$$

In some embodiments, a linear bonus may be applied within the formula. In other embodiments, a quadratic or other corrective bonus factor definition is applied. In some such embodiments, the corrective bonus factor is determinable based at least in part on the particular predicted blending element to be generated via the model for the non-buffer inline tank 504.

The above Formulas are similarly generalizable to a Formula embodying a general non-linear blending non-buffer dynamic element model. For example, in some embodiments at least one predicted blending element or a plurality of predicted blending elements follow(s) a non-linear and non-index function in the non-buffer inline tank 504. In this regard, the Formulas are similarly extendable to such generalized non-linear blending for the non-buffer inline model 504, which follows any generalized non-linear and non-indexable function f(x):

Formula 10B:

$$q_j^{inline} = f(F_{in}, q_1, ..., q_n)$$

where Fin is the flow vector into the non-buffer inline tank, and qi is the vector of blending elements (e.g., qualities) associated with the i-th component of the flow vector $F_{in}$.

It should be appreciated that, in some embodiments, different model(s) are utilized to model different predicted blending elements associated with a particular product in a non-buffer inline tank. For example, in some embodiments, a first predicted blending element is modeled utilizing a linear blending non-buffer dynamic element model, a second predicted blending element is modeled utilizing an index blending non-buffer dynamic element model, a third predicted blending element is modeled utilizing a corrective bonuses blending non-buffer dynamic element model, and/or a fourth blending element modeled utilizing a non-linear blending non-buffer dynamic element model.

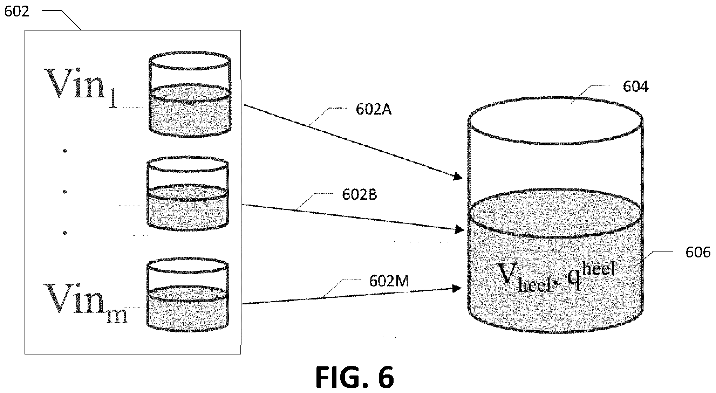

The models depicted and described with respect to FIG. 4 and/or FIG. 5 are further extendable to one or more other model type(s) utilized for modeling predicted blending elements associated with one or more other tank type(s). For example, FIG. 6 illustrates an example visualization of a heel volume dynamic element model in accordance with at least one example embodiment of the present disclosure. In some embodiments, the heel volume dynamic element model is utilized to generate one or more predicted blending element(s) for particular physical component(s) embodying a blender with a heel (e.g., a tank including an existing volume of product within the tank). The particular tank with heel 604 in some embodiments creates a final product produced via a processing plant in combination with an existing heel portion of product 606, and/or blends one or more intermediary input product(s) flowing to a product tank of the processing plant with the existing heel portion of product 606. The heel portion of product 606 may include a particular volume of existing product in the tank, represented by $V_{heel}$. It will be appreciated that the heel portion of product 606 may similarly be associated with a particular vector of qualities, $q^{heel}$. Each quality may represent a particular blending element of the heel portion of product 606, for example a temperature, octane value, and/or other measurable characteristic of the product that remains in the tank with heel 604 from a previous operation. It will be appreciated that the blending elements associated with the product blended in the tank with heel 604 may include any number of qualities.

The tank with heel 604 receives any number of input product volumes. In some embodiments, the tank with heel 604 receives a single input volume of an input product. In some embodiments, the tank with heel 604 receives a plurality of input product volumes of various input products 602. The plurality of input product volumes includes a first volume of input product 602A, a second volume of input product 602B, and so on up to an m'th input product volume 602M. Additionally or alternatively, in some embodiments, the tank with heel 604 may be utilized to produce a final product having particular qualities embodied by particular blending element(s), for example for outputting via the tank.

In some embodiments, predicted blending elements associated with the product produced in the tank with heel 604 may be modeled utilizing any of a myriad of heel volume dynamic element models. In some embodiments, a predicted blending element is generated utilizing a particular heel volume dynamic element model corresponding to the predicted blending element to be generated, characteristic(s) of the tank with heel 604, and/or the like. In this regard, in some embodiments, different model(s) may be utilized to generate difference predicted blending elements. In some embodiments, one or more predicted blending element(s) is/are generated utilizing a linear blending heel volume dynamic element model, index blending heel volume dynamic element model, corrective bonuses blending heel volume dynamic element, and/or a non-linear blending heel volume dynamic element model, as described herein.

In some embodiments, the heel volume dynamic element model may model predicted blending element(s) utilizing the Formula 7A as described above. For example, the linear blending heel volume dynamic element model may be derived based on the linear law and/or mass balance equations described herein, such as to derive Formula 7C:

$$q_j^{final} = \frac{\sum_{i=1}^{m} q_{j,i} V_{in_i} + q_j^{heel} V_{heel}}{\sum_{i=1}^{m} V_{in_i} + V_{heel}}$$

In other contexts, for example for particular blending element(s) that do not follow linear relationship(s), another blending law may be utilized. For example, in some embodiments, an index blending law, non-linear blending law, and/or the like may be utilized.

The Formula 7C is similarly extendable to index blending, representing a prediction of a particular non-linear blending element. In some embodiments, the non-linear blending element is generated utilizing an index and/or non-linear blending heel volume dynamic element model. Given a particular f(q), for example, and its inverse f⁻¹(o), the following Formula 8C may be derived for use in predicting indexable blending elements associated with the tank with heel 604:

Formula 8C:

$$q_j^{final} = f^{-1} \left( \frac{\sum\limits_{i=1}^{m} f(q_{j,i})V_{in_i} + f(q_j^{heel})V_{heel}}{\sum\limits_{i=1}^{m} V_{in_i} + V_{heel}} \right)$$

Additionally or alternatively, in some embodiments, the Formulas are extendable to corrective bonus blending, representing a prediction of a particular blending element utilizing a corrective bonus for the tank with heel 604. In some such embodiments, the Formula(s) include Formula 9C embodying a corrective bonuses blending heel volume dynamic element model. For example, the following Formula may be derived for use in predicting corrective bonus blending elements.

Formula 9C:

$$q_j^{final} = \frac{\sum\limits_{i=1}^{m+1} q_{j,i}V_{in_i} + \sum\limits_{i,k=1}^{m+1} b_{i,k}V_{in_i}V_{in_k}}{\sum\limits_{i=1}^{m+1} V_{in_i}}$$

where index m+1 refers to the heel volume or quality representing a particular blending element.

It will be appreciated that, as described above, in other embodiments another corrective bonus may be utilized. As depicted, Formula 8B utilizes a bonus of

It will be appreciated that, as described above, in other embodiments another corrective bonus may be utilized. As depicted, Formula 8B utilizes a bonus of:

$$\sum\limits_{i,k=1}^{m+1} b_{i,k}V_{in_i}V_{in_k}$$

In some embodiments, a linear bonus may be applied within the formula. In other embodiments, a quadratic or other corrective bonus factor definition is applied. In some such embodiments, the corrective bonus factor is determinable based at least in part on the particular predicted blending element to be generated via the model for the tank with heel 604.

The above Formulas are similarly generalizable to a Formula embodying a general non-linear blending heel volume dynamic element model. For example, in some embodiments at least one predicted blending element or a plurality of predicted blending elements follow(s) a non-linear and non-index function in the tank with heel 604. In this regard, the Formulas are similarly extendable to such generalized non-linear blending for the tank with heel 604, which follows any generalized non-linear and non-indexable function *f(x):*

Formula 10C:

$$q_j^{final} = f(V_{in}, V_{heel}, q_1, \ldots, q_n)$$

It should be appreciated that, in some embodiments, different model(s) are utilized to model different predicted blending elements associated with a particular product in a tank with heel. For example, in some embodiments, a first predicted blending element is modeled utilizing a linear blending heel volume dynamic element model, a second predicted blending element is modeled utilizing an index blending heel volume dynamic element model, a third predicted blending element is modeled utilizing a corrective bonuses blending heel volume dynamic element model, and/or a fourth blending element modeled utilizing a non-linear blending heel volume dynamic element model.

In this regard, it will appreciated that different model(s) may be utilized based at least in part on different tank

18

type(s) associated with generation of a product. Additionally or alternatively, it will be appreciated that different model(s) may be utilized based at least in part on particular blending element(s) and/or type(s) of blending element(s) to be modeled.

EXAMPLE DATA ARCHITECTURES FOR MODEL IDENTIFICATION OF THE DISCLOSURE

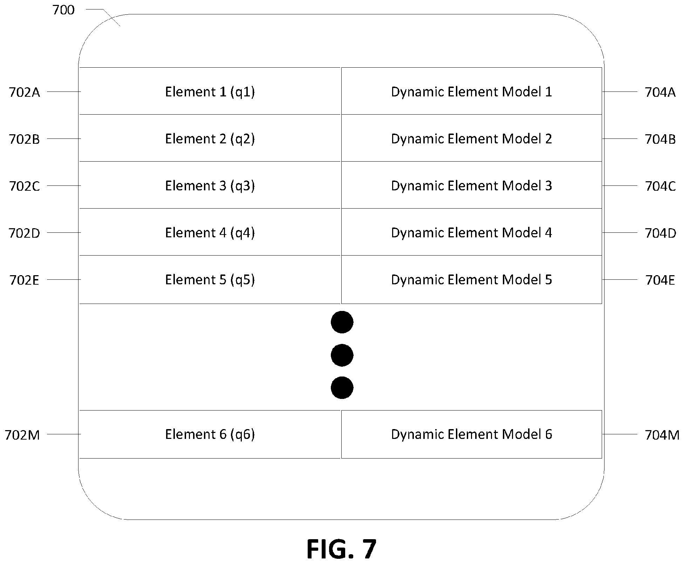

FIG. 7 illustrates an example data structure linking different predicted blending elements with different model types in accordance with at least one example embodiment of the present disclosure. Specifically, FIG. 7 depicts an example data structure 700 that links a particular blending element with a particular dynamic element model utilized to model a value for that particular blending element. In some embodiments, the data structure 700 is embodied by a table maintained by one or more computing device(s) embodied in hardware, software, firmware, and/or a combination thereof, for example the apparatus 200. Alternatively or additionally, in some embodiments, the data structure 700 is embodied by a database and/or portion thereof, for example a particular table of the database, that maintains such data. In some embodiments the data structure 700 is predetermined and/or static. In some embodiments, the data structure is user-configurable, for example to enable the user to define such relationship(s) between a particular blending element and corresponding dynamic element model.

Specifically, as illustrated, the data structure includes data records corresponding to a plurality of blending elements 702A-702M. In some embodiments, each of the blending elements is predictable associated with a particular product produced via a particular tank. It will be appreciated that the data structure 700 may include record(s) corresponding to any number of blending elements. In some embodiments, each blending element is represented by a unique identifier that enables retrieval of the corresponding record in the data structure 700.

Each blending element 702A-702M is represented in a particular record corresponding to a particular dynamic element model, specifically the dynamic element models 704A-704M corresponding to the blending elements 702A-702M. In this regard, the dynamic element model corresponding to a particular blending element of the blending elements 702A-702M may represent the particular model to be utilized in modeling that predicted blending element.

In some embodiments, the data structure 700 is usable to retrieve the particular model, and/or model type, to be utilized to generate a particular predicted blending element, for example as indicated in the record associated with the blending element representing the predicted blending element to be modeled. For example, in some embodiments, the first blending element 702A represents a temperature quality, which is associated with a first dynamic element model 704A representing an index blending model. Similarly, the second blending element 702B may represent an octane quality, which is associated with a second dynamic element model 704B representing a non-linear blending model. The specific implementation of the non-linear blending model may be determined based at least in part on the type of tank within which the product is to be blended, for example.

EXAMPLE COMPTUER-IMPLEMENTED PROCESSES OF THE DISCLOSURE

Having described example systems, apparatuses, data architectures, and model implementations in accordance with the present disclosure, example processes for modeling at least one predicted blending element will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

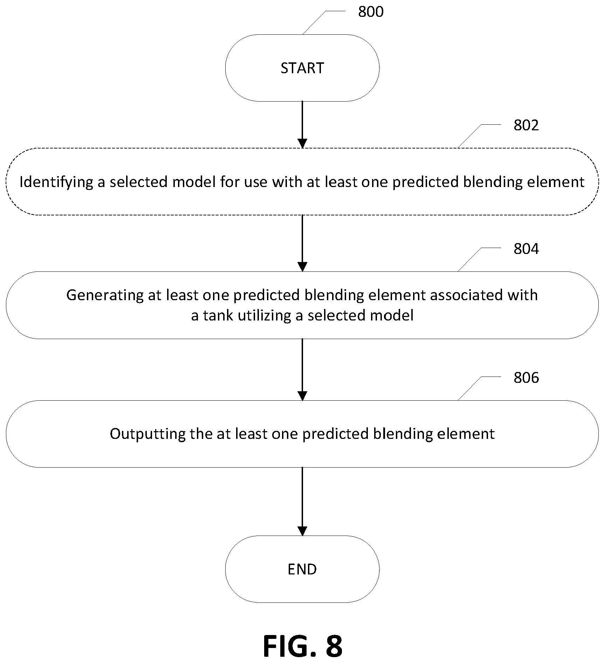

FIG. 8 illustrates a flowchart including example operations of an example process for modeling of predicted blending elements in accordance with at least one example embodiment of the present disclosure. Specifically, FIG. 8 illustrates an example computer-implemented process 800. In some embodiments, the process 800 is embodied by computer program code stored on a non-transitory computer-readable storage medium of a computer program product configured for execution to perform the process as depicted and described. Alternatively or additionally, in some embodiments, the process 800 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication separate physical component(s) of a processing plant, and/or the like. For purposes of simplifying the description, the process 800 is described as performed by and from the perspective of the apparatus 200.

The process 800 begins at optional operation 1002. At optional operation 802, the apparatus 200 includes element link management circuitry 210, model maintenance circuitry 212, element prediction circuitry 214, optional control circuitry 216,, communications circuitry 208, input/output circuitry 206, processor 202, and/or the like, or a combination thereof, that identifies a selected model for use with at least one predicted blending element. In some embodiments, each predicted blending element to be modeled is identified as corresponding to a particular model utilized to generate that predicted blending element. In some embodiments, a link between a particular predicted blending element and a particular model is maintained by the apparatus 200 and/or otherwise accessible to the apparatus 200, for example via a table and/or datastore embodying the data structure as depicted and described herein with respect to FIG. 7. Additionally or alternatively, in some embodiments, the selected model is identified based at least in part on one or more other portion(s) of data. For example, in some embodiments, the selected model is identified based at least in part on a tank type associated with a tank determined to be utilized to generate a particular final product, for example for which the at least one predicted blending element is to be modeled.

At operation 804, the apparatus 200 includes element link management circuitry 210, model maintenance circuitry 212, element prediction circuitry 214, optional control circuitry 216,, communications circuitry 208, input/output circuitry 206, processor 202, and/or the like, or a combination thereof, that generate at least one predicted blending element associated with a tank utilizing a selected model. In some embodiments, the tank is of a particular tank type, for example a pool tank, a tank with heel, and/or a non-buffer inline tank. In some such embodiments, each type of tank is associated with a different model. Additionally or alternatively, in some embodiments, each predicted blending element of the at least one predicted blending element is associated with a different selected model utilized to generate the predicted blending element. In some embodiments, the selected model is identified at a previous step, for example as described with respect to operation 802. Additionally or alternatively, in some embodiments, the selected model is preselected.

In some embodiments, the apparatus 200 generates a single predicted blending element. In some embodiments, the apparatus 200 generates a plurality of predicted blending elements. In some embodiments, the plurality of predicted blending elements is generated utilizing a single selected model for each predicted blending element. In other embodiments, different predicted blending elements are generated utilizing different dynamic element model(s). For example, in some embodiments, a first model is utilized for a first predicted blending element, and a second model is utilized for a second predicted blending element, the first and second model selected from a pool tank dynamic element model, a non-buffer dynamic element model, and a heel volume dynamic element model. In some embodiments, the apparatus 200 generates a plurality of different predicted blending elements, each corresponding to a particular model type utilized to generate that predicted blending element. Additionally or alternatively, in some such embodiments, the apparatus 200 may utilize a combination of dynamic element model(s), for example the pool tank dynamic element model, the non-buffer dynamic element model, and/or the heel volume dynamic element model.

At operation 806, the apparatus 200 includes element link management circuitry 210, model maintenance circuitry 212, element prediction circuitry 214, optional control circuitry 216,, communications circuitry 208, input/output circuitry 206, processor 202, and/or the like, or a combination thereof, that outputs the at least one predicted blending element. In some embodiments, the apparatus 200 outputs the at least one predicted blending element via a display of the apparatus 200, for example by causing rendering of user interface via the apparatus 200. Additionally or alternatively, in some embodiments, the apparatus 200 outputs the at least one predicted blending element via at least one transmission to a client device to cause the client device to cause rendering of a user interface including or otherwise associated with the predicted blending element. Additionally or alternatively still, in some embodiments, the apparatus 200 outputs the at least one predicted blending element as data for subsequent downstream processing. In some embodiments, the apparatus 200 outputs the at least one predicted blending element by transmitting the at least one predicted blending element for use and/or further processing by an external device, system, and/or the like. In some embodiments, the apparatus 200 outputs the at least one predicted blending element for use in controlling one or more physical component(s) of a processing plant, such as the tank itself, based at least in part on the generated at least one predicted blending element. In some embodiments, the apparatus 200 outputs the at least one predicted blending element to operate at least one physical component of a processing plant based at least in part on the at least one predicted blending element, for example by setting a configuration of at least one physical component in the processing plant.

In some embodiments, the at least one predicted blending element is outputted for use with at least one plant-wide optimization process. For example, in some embodiments the apparatus 200 outputs the at least one predicted blending element by applying the at least one predicted blending element to a plant-wide optimization process. In some embodiments, the plant-wide optimization process generates an optimized product distribution associated with a target time interval. For example, the optimization may be utilized to optimize target amounts of final products in a manner that maximizes and/or minimizes one or more target parameter(s), for example a profit parameter associated with operation of a processing plant.

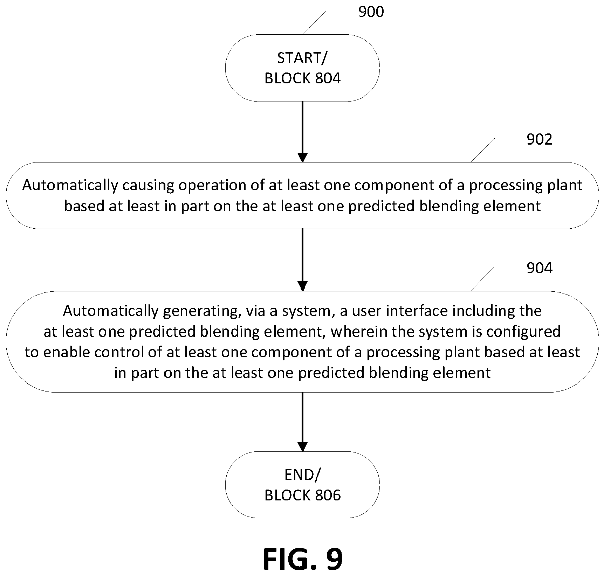

FIG. 9 illustrates a flowchart including example operations of an example process for controlling operation of a processing plant based at least in part on at least one predicted blending element in accordance with at least one example embodiment of the present disclosure. Specifically, FIG. 9 depicts operations of an example process 900. In some embodiments, the process 900 is embodied by computer program code stored on a non-transitory computer-readable storage medium of a computer program product configured for execution to perform the process as depicted and described. Alternatively or additionally, in some embodiments, the process 900 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 300 is in communication with one or more external apparatus(es), system(s), device(s), and/or the like, to perform one or more of the operations as depicted and described. For example, the apparatus 200 in some embodiments is in communication separate physical component(s) of a processing plant, and/or the like. For purposes of simplifying the description, the process 800 is described as performed by and from the perspective of the apparatus 200.

The process 900 begins at operation 902. In some embodiments, the process 900 begins after one or more operations depicted and/or described with respect to any of the other processes described herein. For example, in some embodiments as depicted, the process 900 begins after execution of operation 804. In this regard, some or all of the process 800 may replace or supplement one or more blocks depicted and/or described with respect to any of the other processes described herein. For example, in some embodiments as depicted, the process 900 supplants, supplements, and/or otherwise replaces an operation of the process 800. Additionally or alternatively, as depicted, upon completion of the process 900, flow may return to one or more operations of another process. For example, as depicted, flow may return to operation 806 as depicted and described.

At operation 902, the apparatus 200 includes element link management circuitry 210, model maintenance circuitry 212, element prediction circuitry 214, optional control circuitry 216,, communications circuitry 208, input/output circuitry 206, processor 202, and/or the like, or a combination thereof, that automatically causes operation of at least one component of a processing plant. In some embodiments, the apparatus 200 causes operation based at least in part on the at least one predicted blending element. For example, in some embodiments, the apparatus 200 may cause configuration of a particular blender to operate so as to change one or more of the predicted blending element(s) of a final product produced via the tank. In some embodiments, the apparatus 200 may cause an increase and/or decrease in flow and/or volume of one or more input products to the tank, for example, to cause a particular change in the predicted blending element to meet a desired value for the predicted blending element and/or combination of predicted blending elements.

At operation 904, the apparatus 200 includes element link management circuitry 210, model maintenance circuitry 212, element prediction circuitry 214, optional control circuitry 216,, communications circuitry 208, input/output circuitry 206, processor 202, and/or the like, or a combination thereof, that automatically generates, via a system, a user interface. In some embodiments, the user interface includes the at least one predicted blending element. In some embodiments, the user interface includes label text and/or graphical representations of each predicted blending element of the at least one predicted blending element.

In some embodiments, the system is configured to enable control of at least one component of a processing plant based at least in part on the at least one predicted blending element. In some embodiments, the apparatus 200 transmits and/or otherwise outputs the at least one predicted blending element to cause generating of the user interface. In some embodiments, the user interface is generated via a system embodying a user terminal or client device utilized as a control panel of physical components of the processing plant. In this regard, a user may utilize the user interface to analyze the values modeled for the at least one predicted blending element, and adjust operations of the physical components) to generate a desired final product via user interaction with the user interface and/or a separate user interface and/or system. It will be appreciated that in other embodiments, such changes to the physical component(s) is/are initiated automatically by the apparatus 200 and/or external system.

Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

**Claims**

1. A computer-implemented method for modeling of predicted blending elements comprising:

   generating at least one predicted blending element associated with a tank utilizing a pool tank dynamic element model, a non-buffer dynamic element model, or a heel volume dynamic element model; and
   outputting the at least one predicted blending element.

2. The computer-implemented method according to claim 1, wherein the at least one predicted blending element is applied to a plant-wide optimization process that generates an optimized product distribution associated with a target time interval.

3. The computer-implemented method according to any one of claims 1-2, wherein outputting the at least one predicted blending element comprises:
   automatically causing operation of at least one physical component of a processing plant based at least in part on the at least one predicted blending element.

4. The computer-implemented method according to any one of claims 1-3, wherein outputting the at least one predicted blending element comprises:
   automatically generating, via a system, a user interface including the at least one predicted blending element, wherein the system is configured to enable control of at least one physical component of a processing plant based on the at least one predicted blending element.

5. The computer-implemented method according to any one of claims 1-4, wherein the at least one predicted blending element is generated utilizing the pool tank dynamic element model, wherein the pool tank dynamic element model is based at least in part on at least one flow rate associated with the tank.

6. The computer-implemented method according to any one of claims 1-5, wherein the at least one predicted blending element is generated utilizing the pool tank dynamic element model, wherein the pool tank dynamic element model is one of a linear blending pool tank dynamic element model, an index blending pool tank dynamic element model, a corrective bonuses blending pool tank dynamic element model, or a non-linear blending pool tank dynamic element model.

7. The computer-implemented method according to claim 6, wherein the corrective bonuses blending pool tank dynamic element model is based at least in part on a linear bonus factor or a polynomial bonus factor.

8. The computer-implemented method according to any one of claims 1-7, wherein the non-buffer dynamic element model is a linear blending non-buffer dynamic element model, index blending non-buffer dynamic element model, corrective bonuses blending non-buffer dynamic element model, or a non-linear blending non-buffer dynamic element model.

9. The computer-implemented method according to claim 8, wherein the corrective bonuses blending non-buffer dynamic element model is based at least in part on a linear bonus factor or a polynomial bonus factor.

10. The computer-implemented method according to any one of claims 1-9, wherein the heel volume dynamic element model is a linear blending heel volume dynamic element model, index blending heel volume dynamic element model, corrective bonuses blending heel volume dynamic element model, or a non-linear blending heel volume dynamic element model.

11. The computer-implemented method according to any one of claims 1-10, further comprising:
generating a plurality of predicted blending elements, the plurality of predicted blending elements comprising at least (i) a first predicted blending element corresponding to a first model of the pool tank dynamic element model, the non-buffer dynamic element model, or the heel volume dynamic element model, and (ii) a second predicted blending element corresponding to a different, second model of the pool tank dynamic element model, the non-buffer dynamic element model, or the heel volume dynamic element model.

12. The computer-implemented method according to any one of claims 1-11, further comprising:
generating a plurality of different predicted blending elements, wherein each predicted blending element of the plurality of different predicted blending elements corresponds to a particular model type utilized to generate that predicted blending element.

13. The computer-implemented method according to any one of claims 1-12, further comprising:

generating a plurality of different predicted blending elements using a combination of the pool tank dynamic element model, the non-buffer dynamic element model, and the heel volume dynamic element model; and operating at least one physical component of a processing plant based on the at least one predicted blending element.

14. An apparatus comprising at least one processor and at least one memory including computer program code, the at least one memory and the computer program code configured to, with the at least one processor, cause the apparatus to perform any one of the methods according to claims 1-13.

15. A computer program product comprising at least one non-transitory computer-readable medium having computer-readable program instructions stored therein, the computer-readable program instructions comprising instructions, which when performed by an apparatus, are configured to cause the apparatus to at least perform any one of the methods according to claims 1-13.

FIG. 1

**200**

Element Link
Management
Circuitry
210

Model Maintenance
Circuitry
212

Element Prediction
Circuitry
214

Control Circuitry
216

Optimization
Planning Circuitry
218

Lift Planning
Circuitry
220

Memory
204

Processor
202

Input/Output
Circuitry
206

Communications
Circuitry
208

**FIG. 2**

FIG. 3

**FIG. 4**

FIG. 5

FIG. 6

700

| | |
|---|---|
| Element 1 (q1) | Dynamic Element Model 1 |
| Element 2 (q2) | Dynamic Element Model 2 |
| Element 3 (q3) | Dynamic Element Model 3 |
| Element 4 (q4) | Dynamic Element Model 4 |
| Element 5 (q5) | Dynamic Element Model 5 |

702A — 
702B — 
702C — 
702D — 
702E — 

— 704A
— 704B
— 704C
— 704D
— 704E

●
●
●

| | |
|---|---|
| Element 6 (q6) | Dynamic Element Model 6 |

702M —

— 704M

## FIG. 7

800

START

802

Identifying a selected model for use with at least one predicted blending element

804

Generating at least one predicted blending element associated with
a tank utilizing a selected model

806

Outputting the at least one predicted blending element

END

# FIG. 8

900

START/
BLOCK 804

902

Automatically causing operation of at least one component of a processing plant
based at least in part on the at least one predicted blending element

904

Automatically generating, via a system, a user interface including the
at least one predicted blending element, wherein the system is configured
to enable control of at least one component of a processing plant based at least
in part on the at least one predicted blending element

END/
BLOCK 806

## FIG. 9

Europäisches
Patentamt

European
Patent Office

Office européen
des brevets

# EUROPEAN SEARCH REPORT

Application Number

EP 23 20 5541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/296690 A1 (VARVAREZOS DIMITRIOS [US] ET AL) 22 November 2012 (2012-11-22) * abstract * * paragraphs [0007] – [0008], [0047] – [0059], [0116] – [0117] * | 1–15 | INV. G06Q10/04 G06Q10/06 G06Q10/0637 |
| X | US 2016/042074 A1 (MU SHENG JING [SG] ET AL) 11 February 2016 (2016-02-11) * abstract * * paragraphs [0016] – [0017], [0051] – [0055] * | 1–15 | |
| X | US 2012/083914 A1 (KOCIS GARY R [US] ET AL) 5 April 2012 (2012-04-05) * abstract * * paragraphs [0010] – [0011], [0015] – [0022], [0046] – [0062] * | 1–15 | |
| A | JOLY M ET AL: "Planning and scheduling for petroleum refineries using mathematical programming", BRAZILIAN JOURNAL OF CHEMICAL ENGINEERING, BRAZILAIN SOCIETY OF CHEMICAL ENGINEERING, SAO PAULO, BR, vol. 19, no. 2, 1 April 2002 (2002-04-01), pages 207–228, XP002270010, ISSN: 0104-6632, DOI: 10.1590/S0104-66322002000200008 * abstract * * page 208 – page 213 * | 1–15 | TECHNICAL FIELDS SEARCHED (IPC) G06Q G06F |

The present search report has been drawn up for all claims

| Place of search | Date of completion of the search | Examiner |
|---|---|---|
| Munich | 4 April 2024 | Moltenbrey, Michael |

EPO FORM 1503 03.82 (P04C01)

## ANNEX TO THE EUROPEAN SEARCH REPORT
## ON EUROPEAN PATENT APPLICATION NO.

EP 23 20 5541

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2024

| Patent document cited in search report | | Publication date | Patent family member(s) | | Publication date |
|---|---|---|---|---|---|
| US 2012296690 | A1 | 22-11-2012 | EP | 2751627 A2 | 09-07-2014 |
| | | | EP | 3699842 A1 | 26-08-2020 |
| | | | US | 2012296690 A1 | 22-11-2012 |
| | | | WO | 2012162141 A2 | 29-11-2012 |
| US 2016042074 | A1 | 11-02-2016 | NONE | | |
| US 2012083914 | A1 | 05-04-2012 | CA | 2813693 A1 | 12-04-2012 |
| | | | CN | 103229114 A | 31-07-2013 |
| | | | EP | 2625574 A1 | 14-08-2013 |
| | | | SG | 189198 A1 | 31-05-2013 |
| | | | US | 2012083914 A1 | 05-04-2012 |
| | | | US | 2014379112 A1 | 25-12-2014 |
| | | | WO | 2012047782 A1 | 12-04-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63384022